# EUROPEAN PATENT APPLICATION

(11) **EP 4 156 399 A1**
(43) Date of publication of application: **29.03.2023**
(21) Application number: 21807985.3
(22) Date of filing: 11.03.2021
(51) Int. Cl.: H01M 50/409, H01M 50/451, H01M 10/0525

(54) **ISOLATING MEMBRANE OF ELECTROCHEMICAL DEVICE AND PREPARATION METHOD THEREFOR**

(30) Priority: 21.05.2020 CN 202010434825
(71) Applicant: Shanghai Energy New Materials Technology Co., Ltd., Shanghai 201399 (CN)
(72) Inventor: CHENG, Yue, Shanghai 201399 (CN); CHEN, Yongle, Shanghai 201399 (CN); SHI, Xinyu, Shanghai 201399 (CN); HU, Jun, Shanghai 201399 (CN); YU, Shaobo, Shanghai 201399 (CN)
(74) Representative: Cabinet Chaillot
(86) International application number: PCT/CN2021/080286
(87) International publication number: WO 2021/232904

(57) **Abstract**

Disclosed in the present invention is an isolating membrane of an electrochemical device, comprising a modified porous base membrane and a functional layer arranged on the surface of at least one side of the modified porous base membrane. The functional layer contains slurry of organic matter and inorganic matter compounds, and the modified porous base membrane contains particles of a lithium-containing conductive ion compound. According to the present invention, the lithium-containing conductive ion compound is prepared by adopting a sol-gel-hydrothermal method, and small-particle-size particles of the lithium-containing conductive ion compound are embedded into the isolating membrane base membrane, so that the defects of poor ionic conductivity and poor wettability of an existing isolating membrane are overcome, and moreover, the isolating membrane has good adhesion and heat resistance due to the coated functional layer.

## Description

### TECHNICAL FIELD

The present invention relates to the technical field of lithium-ion batteries, and in particular to a separator for electrochemical devices and a preparation method therefor.

### BACKGROUND

As a new clean and renewable secondary energy source, lithium-ion batteries have the advantages of high working voltage, light weight and high energy density and the like. They are widely applied to the fields of electric tools, digital cameras, mobile phones and notebook computers and the like, and show a strong development trend.

Separators, as one of the key components of lithium-ion batteries, are used to separate the positive electrode and the negative electrode of batteries to prevent them from direct contact that causes a short circuit. In addition, they are required to have good permeability for lithium ions, and to close the ion channels when batteries are working at unduly high temperatures to ensure that batteries are safe. Therefore, separators play a crucial role in ensuring the safety of lithium-ion batteries.

Lithium ion conductors are characterized by high electrical conductivity, low activation energy and the most negative electrode potential, etc. Intensive studies have been done on Li₃N of a stratified structure, Lisicon (Li₁₄ZnGeO₄) of a skeleton structure and LiTi₂P₃O₁₂-based solid solutions and the like. However, inorganic lithium ion conductors have no practical value due to different conductivity, low decomposition voltage and low resistance to metallic lithium corrosion and the like. Although later discovered organic lithium ion conductors such as complexes of polymers (e.g., polyethylene oxide) and alkali metal salts (e.g., LiCF₃SO₃) have lower electrical conductivity than inorganic lithium ion conductors, they are easily processed into membranes, which offsets the disadvantage in conductivity, and have excellent viscoelasticity. They have been widely used as separator materials in high-power lithium batteries and used for manufacturing high-specific-energy large-capacity batteries and high-temperature fuel cells.

At present, separators widely applied to lithium batteries are mainly polyolefin-based melted-stretched separators. The shutdown effects of these materials help improve safety when batteries generate heat. However, conventional commercial PE/PP separators have poor wettability to electrolyte, poor capacity to retain liquid and relatively low ionic conductivity and suffer serious thermal shrinkage. These problems will affect the processing, cycle and rate performance as well as safety of batteries under high temperature. The process of coating polymer separators with ceramic slurry to improve the heat resistance and mechanical property, and thus the safety, of the separators has been widely applied and researched. However, there has been no mention of modifying the base membrane to improve the permeability for lithium ions. Therefore, there is a need in the art for a separator for electrochemical devices that can improve the safety of batteries while having better ionic conductivity.

### SUMMARY

In view of this, the present invention is intended to provide a separator for electrochemical devices and a preparation method therefor to eliminate the disadvantages in the existing separators that have poor ionic conductivity and relatively poor wettability and, further, to allow the separator to have a good ability to adhere and good resistance to heat.

For the above purpose, the present invention adopts the following technical solutions:
The present invention provides a separator for electrochemical devices, the separator comprises a modified porous base membrane and a functional layer arranged on a surface of at least one side of the modified porous base membrane. The functional layer contains a composite slurry containing organic and inorganic substances. The modified porous base membrane contains particles that contain a lithium-conducting ionic compound.

Further, the lithium-conducting ionic compound includes LiAlSi₂O₆, Li₂FeSiO₄ and LiFePO₄.

Further, the particles that contain the lithium-conducting ionic compound have a particle size of 5-20 nm.

Further, the particles that contain the lithium-conducting ionic compound have a particle size of 10-20 nm.

Further, the composite slurry containing organic and inorganic substances consists of the following ingredients in parts by weight: 5-80 parts of an organic polymer, 3-40 parts of an inorganic substance, and 50-100 parts of an organic solvent.

Further, the organic polymer is polyvinylidene difluoride with a molecular weight of 0.1-1 million; in the composite slurry containing organic and inorganic substances, solid content of the polyvinylidene difluoride is 5-20 wt%.

Further, the inorganic substance includes aluminum trioxide, boehmite, silicon dioxide, titanium dioxide, barium sulfate, calcium carbonate and calcium oxide. Further, the organic solvent is selected from one of or a combination of more than one of *N*-methylpyrrolidone (NMP), dimethylacetamide (DMAC), acetone, *N*,*N*-dimethylformamide (DMF) and dimethyl sulfoxide (DMSO).

The present invention also provides a method for preparing the modified porous base membrane using a sol-gel-hydrothermal method. Specifically, after corona pretreatment, an unmodified porous base membrane is passed through a water tank containing a saturated aqueous solution of the lithium-conducting ionic compound, and then dried in a drying oven to give the modified porous base membrane containing the particles that contain the lithium-conducting ionic compound.

Further, a rate of the unmodified porous base membrane passing through the water tank containing the saturated aqueous solution of the lithium-conducting ionic compound is 5 m/min.

The present invention also provides a method for preparing the separator for electrochemical devices described above, the method comprises the following steps:
S1, preparing the modified porous base membrane: after corona pretreatment, passing an unmodified porous base membrane through a water tank containing a saturated aqueous solution of the lithium-conducting ionic compound, and then performing drying in a drying oven to give the modified porous base membrane;
S2, preparing the composite slurry containing organic and inorganic substances; dissolving the organic polymer in the organic solvent according to a predetermined ratio by mechanically stirring and mixing to obtain a first mixture; mixing the inorganic substance and the organic solvent evenly according to a predetermined ratio by mechanically stirring to obtain a second mixture, and mixing the first mixture in which the organic polymer is completely dissolved and the second mixture which is mixed evenly by mechanically stirring to give the composite slurry; and
S3, coating the composite slurry described above to the surface of at least one side of the modified porous base membrane to form the functional layer.

The present invention has the following beneficial effects:
1) The present invention provides a separator for electrochemical devices and a preparation method therefor. By using the sol-gel-hydrothermal method, the modified porous base membrane containing particles that contain the lithium-conducting ionic compound is produced, in which the particles containing the lithium--conducting ionic compound are embedded in the base membrane of the separator. Accordingly, the ionic conductivity of the separator is greatly improved, the internal resistance of an electrochemical device using the separator is greatly reduced, and the cycle performance of the electrochemical device is greatly improved. The separator exhibits excellent electrochemical performance.
2) The present invention provides a separator for electrochemical devices and a preparation method therefor. After the base membrane is modified, the wettability of the separator is also significantly improved. The separator exhibits excellent physical and chemical performance.
3) The present invention provides a separator for electrochemical devices and a preparation method therefor. By applying a composite slurry containing organic and inorganic substances to one side or both sides of the modified porous base membrane, the thermal shrinkage of the separator is reduced, the ability to adhere is strengthened, and the problem that the separator has relatively poor wettability in the prior art is improved. The separator exhibits excellent thermal performance and physical and chemical performance.

### BRIEF DESCRIPTION OF THE DRAWINGS

FIG. 1 shows the preparation method for a separator structure in a battery according to the present invention.
FIG. 2 is a schematic view of the structure of the separator for electrochemical devices according to some embodiments of the present invention.
FIG. 3 is a schematic view of the structure of the separator for electrochemical devices according to other embodiments of the present invention.

### Description of reference numerals for elements

- 100: modified porous base membrane
- 101: functional layer
- S1-S3: step 1 to step 3

### DETAILED DESCRIPTION

The specific embodiments of the present invention are explained below in detail with reference to the drawings. It should be understood that the specific embodiments described herein are intended to illustrate and explain the present invention rather than to limit the present invention.

The endpoints of the ranges and any values disclosed herein are not limited to the precise ranges or values, and these ranges or values should be understood to encompass values close to these ranges or values. For numerical ranges, the range between endpoint values of each range, the range between endpoint values of each range and a single value therein, as well as the range between two single values, can be combined with each other to obtain one or more new numerical ranges, which should be construed as being specifically disclosed herein.

The present invention provides a separator for electrochemical devices, which comprises a modified porous base membrane 100 and a functional layer 101 arranged on a surface of at least one side of the modified porous base membrane 100. The functional layer 101 contains a composite slurry containing organic and inorganic substances. The modified porous base membrane 100 contains particles that contain a lithium-conducting ionic compound.

Specifically, the lithium-conducting ionic compound includes LiAlSi₂O₆, Li₂FeSiO₄ and LiFePO₄.

Specifically, the particles that contain the lithium-conducting ionic compound have a particle size of 5-20 nm.

Specifically, the particles that contain the lithium-conducting ionic compound have a particle size of 10-20 nm.

The present invention also provides a slurry for preparing the functional layer of the separator in a lithium-ion battery, the slurry comprises the following components in parts by weight:
5-80 parts of an organic polymer;
3-40 parts of an inorganic substance; and
50-100 parts of an organic solvent.

Specifically, the organic polymer is polyvinylidene difluoride with a molecular weight of 0.1-1 million; the solid content is 5-20 wt%.

Preferably, the inorganic substance includes aluminum trioxide, boehmite, silicon dioxide, titanium dioxide, barium sulfate, calcium carbonate and calcium oxide.

Preferably, the organic solvent is selected from one of or a combination of more than one of NMP, DMAC, acetone, DMF, and DMSO.

In some embodiments of the present invention, the base membrane is a PE base membrane, which may be any of the various base membranes suitable for use in preparing separators of lithium-ion batteries in the art; for example, the base membrane is generally a linear low-density polyethylene base membrane.

In some embodiments of the present invention, the base membrane has a thickness of 5-25 µm, and the functional layer has a thickness of 1-4 µm.

The present invention also provides a method for preparing a lithium fast ion nanoconductor using a sol-gel-hydrothermal method and modifying the porous base membrane described above. Specifically, after corona pretreatment, an unmodified porous base membrane is wetted in a solution containing nano lithium-conducting ions; after being fully wetted by the solution, the porous base membrane is dried in a drying oven to give the modified base membrane 100 with a small particle sized lithium-conducting ionic compound embedded in it. Specifically, a rate of the unmodified porous base membrane passing through a water tank containing saturated aqueous solution of the lithium-conducting ionic compound (i.e., a speed of the porous base membrane being fully wetted and then leaving the water tank) is 5 m/min.

The present invention also provides a method for preparing the separator for electrochemical devices described above, which comprises the following steps:
S1, preparing the modified porous base membrane 100:
   after corona pretreatment, passing an unmodified porous base membrane through the water tank containing the saturated aqueous solution of the lithium-conducting ionic compound, and then performing drying in a drying oven to give the modified porous base membrane 100;
S2, preparing the composite slurry containing organic and inorganic substances: dissolving the organic polymer in the organic solvent according to a predetermined ratio by mechanically stirring and mixing to obtain a first mixture; mixing the inorganic substance and the organic solvent evenly according to a predetermined ratio by mechanically stirring to obtain a second mixture, and mixing the first mixture in which the organic polymer is completely dissolved and the second mixture which is mixed evenly by mechanically stirring to give the composite slurry; and
S3, coating the composite slurry described above to the surface of at least one side of the modified porous base membrane to form the functional layer 101.

In some embodiments of the present invention, the slurry is coated to only one side of the base membrane.

In some embodiments of the present invention, the slurry is coated to both sides of the base membrane.

In some embodiments of the present invention, the functional layer is obtained by coating the slurry, passing the modified porous base membrane coated with the slurry through water, and then drying. The step of passing the modified porous base membrane coated with the slurry through water is to place the modified porous base membrane in the water tank so the organic solvent in the slurry is extracted by the water in the water tank; and then the slurry cures to form a coating on the modified porous base membrane in the drying step.

Preferably, the drying is performed at a temperature of 50-60 °C.

The present invention also provides a separator for lithium-ion batteries prepared according to the method described above.

In addition, the present invention also provides a lithium-ion battery, which comprises a positive electrode, a negative electrode, an electrolyte and a separator, wherein the separator is the separator for electrochemical devices of the present invention.

The electrolyte is well known to those skilled in the art and generally consists of an electrolyte lithium salt and an organic solvent. The electrolyte lithium salt used is a dissociable lithium salt and, for example, may be selected from at least one of lithium hexafluorophosphate (LiPF₆), lithium perchlorate (LiClO₄), lithium tetrafluoroborate (LiBF₄) and the like. The organic solvent may be selected from at least one of ethylene carbonate (EC), propylene carbonate (PC), dimethyl carbonate (DMC), ethyl methyl carbonate (EMC), diethyl carbonate (DEC), vinylene carbonate (VC) and the like.

The positive electrode is prepared by mixing a positive electrode material, a conductive agent and a binder for lithium-ion batteries to form a slurry and applying the slurry to an aluminum foil. The positive electrode material used includes any positive electrode material that can be used in a lithium-ion battery, for example, at least one of cobalt lithium oxide (LiCoO₂), nickel lithium oxide (LiNiO₂), manganese lithium oxide (LiMn₂O₄), ferrous lithium phosphate (LiFePO₄) and the like.

The negative electrode is prepared by mixing a negative electrode material, a conductive agent and a binder for lithium-ion batteries into a slurry and applying the slurry to a copper foil. The negative electrode material used includes any negative electrode material that can be used in a lithium-ion battery, for example, at least one of graphite, soft carbon, hard carbon and the like.

The major improvement of the lithium-ion battery according to the present invention is that a new separator is adopted for the lithium-ion battery. The positive electrode, the negative electrode, the separator in the battery and the electrolyte can be arranged (connected) in the same way as the prior art, which is known to those skilled in the art and is not described herein.

A preparation method for the lithium-ion battery according to the present invention comprises stacking or coiling the positive electrode, the separator and the negative electrode in sequence into an electrode core, injecting the electrolyte into the electrode core, and sealing, wherein the separator is the separator for electrochemical devices of the present invention.

The materials or compositions of the positive electrode, the negative electrode and the electrolyte are described above and are not repeated herein.

The present invention is described in detail below by the description of examples.

In the following examples and comparative examples, the physicochemical parameters of the starting materials are as follows:
LiAlSi₂O₆: After Al(ClO₄)₃, Si(OC₂H₅)₄, C₂H₅OH, LiOH, etc. were dispersed by brute force to form a gum, the gum was subjected to a hydrothermal reaction at 120 °C to form a gel. After being dried, the gel was ground, compressed into sheets and subjected to a solid phase reaction at high temperature to give an inorganic nano-powder.

Li₂FeSiO₄: CH₃COOLi·2H₂O, C₆H₅FeO₇·5H₂O, (C₂H₅O)₄Si and C₆H₈O₇·H₂O were dissolved and stirred at reflux at 80 °C to give a gel. After being dried, the gel was ground, compressed into sheets and subjected to a solid phase reaction at high temperature to give a powder.

Polyvinylidene difluoride (PVDF): a translucent or white powder or granule in appearance.

Aluminum oxide: a white powder in appearance.

Dimethylacetamide (DMAC): a colorless transparent liquid, low in toxicity, flammable, and freely miscible with water and organic solvents such as alcohols, ethers, esters, benzene, trichloromethane and aromatic compounds.

The starting materials described above can be purchased from the open market or prepared using methods in the prior art.

In the following examples and comparative examples, the performance parameters were determined as follows:
(1) Thermal shrinkage test for the separator: A separator with intact surfaces and normal appearance was cut into a square of 100 × 100 mm. After marks were made on the periphery, the separator was baked in an oven at 120 °C for 2 h and taken out, and changes in the length of the marks in MD(machine direction)/TD(transverse direction) direction of the baked separator were measured.
(2) Interfacial bonding test for the separator: A separator with intact surfaces and normal appearance was punched into samples that were each 25 mm in width and 100 mm in length. Two pieces of the punch separator samples were stacked and subjected to hot pressing under a pressure of 1 MPa at a temperature of 100 °C at a speed of 100 mm/min on a hot press. Two pieces of the separator bonded together was tested for tension (in N) using a tensile tester. The bonding force = tension/0.025 (in N/m).
(3) Wettability test for the separator: A separator with intact surfaces and normal appearance was cut into a square of 100 × 100 mm. The periphery of the separator was flatly fixed, and the center was suspended in the air. 2 µL of electrolyte was dropped to the center of the separator, and an extension distance A of the droplet in the MD/TD direction on the separator was recorded. Five minutes later, an extension distance B of the droplet in the MD/TD direction on the separator was recorded again. The wetting distance = (B - A)/2.
(4) Ionic conductivity test for the separator: Four pieces of round separator samples with a diameter of Φ50 mm were cut out and soaked in electrolyte in a sealed environment for 1 h. The four pieces of separator samples were sequentially placed in a test mold and resistance values R1, R2, R3 and R4 were measured and read for the four pieces of separator samples respectively using an electrochemical workstation. Calculation of surface resistance: A curve was plotted with the number of layers as the abscissa and the resistance values corresponding to different numbers of layers as the ordinate. The slope A of the curve was calculated. The surface resistance of each test sample R = A • S, where S represents the effective electrode area tested. The thickness D of each separator sample was measured. The ionic conductivity of the separator sample = D/R.
(5) Internal resistance test for the lithium-ion battery: The alternating current voltage drop internal resistance measurement method was adopted. Since a battery is actually equivalent to an active resistor, a fixed frequency and a fixed current (currently, a frequency of 1 kHz and a weak current of 50 mA are generally used) were applied to the battery. Then the voltage of the battery was sampled. After a series of treatments such as rectification and wave filtering were performed, the internal resistance of the battery was calculated through an operational amplifier circuit.
(6) Cycle performance test for the lithium-ion battery: The lithium-ion battery was charged at a rate of 0.5C at room temperature and discharged at a rate of 0.5C. Five hundred cycles were successively performed. The capacity retention was calculated using the formula: capacity retention = (capacity of battery after 500 cycles/capacity of battery at room temperature before cycles) × 100%.

### Example 1

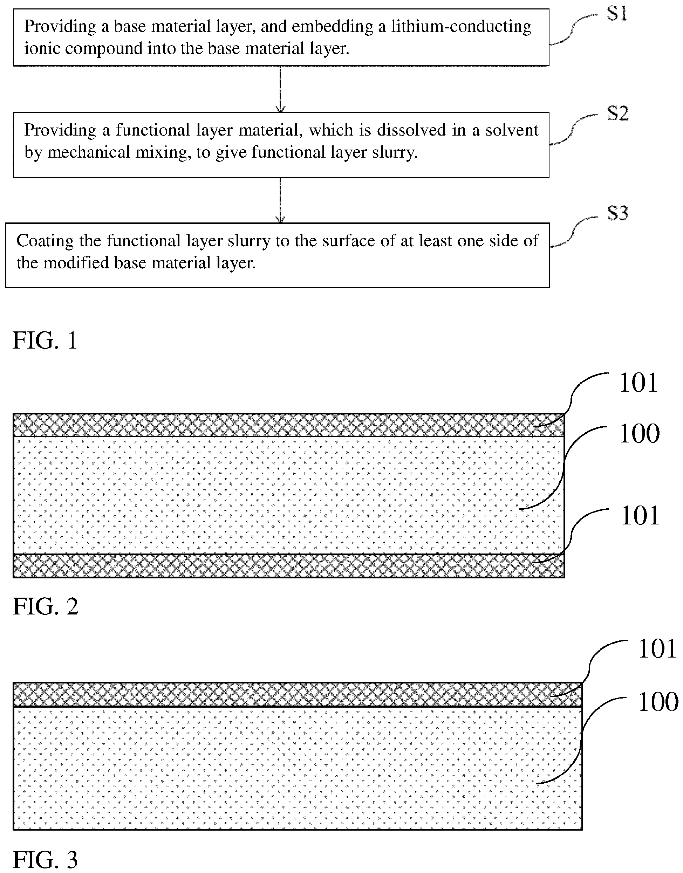

1. 0.7 kg of polyvinylidene difluoride was added to 6.3 kg of DMAC solution and completely dissolved by mechanically stirring to give a transparent colloidal solution a. 0.3 kg of powdered aluminum oxide was added to 2.7 kg of DMAC solution and completely dispersed by mechanically stirring to give a solution b. a and b were mixed by stirring to give a composite slurry.
2. After corona pretreatment, a 12 µm PE base membrane was passed through a water tank containing a saturated aqueous solution of LiAlSi₂O₆ at a speed of 5 m/min. After passing through the water tank, the base membrane was dried in a drying oven to give the modified base membrane 100.
3. A gravure roller coating method (specifically, the composite slurry was pumped onto a gravure roller; then the gravure roller was rotated, and the material was brought onto the gravure roller; the gravure roller was brought into contact with the modified base membrane 100 to apply the composite slurry to the modified base membrane 100) was adopted to apply the composite slurry to one side of the modified base membrane 100 at a speed of 30 m/min. After passing through the water tank, the base membrane was dried with a three-staged drying oven, with the temperatures for the stages of the drying oven being 50 °C, 60 °C and 55 °C respectively, to give a double-layer coated lithium-ion battery separator (as shown in FIG. 3). The thickness of the coated lithium-ion battery separator was 14 µm, and the thickness of the coating was 2 µm. This batch of separators were marked as A.

### Example 2

1. 0.7 kg of polyvinylidene difluoride was added to 6.3 kg of DMAC solution and completely dissolved by mechanically stirring to give a transparent colloidal solution a. 0.3 kg of powdered aluminum oxide was added to 2.7 kg of DMAC solution and completely dispersed by mechanically stirring to give a solution b. a and b were mixed by stirring to give a composite slurry.
2. After corona pretreatment, a 12 µm PE base membrane was passed through a water tank containing a saturated aqueous solution of LiAlSi₂O₆ at a speed of 5 m/min. After passing through the water tank, the base membrane was dried in a drying oven to give the modified base membrane 100.
3. A gravure roller coating method (specifically, the composite slurry was pumped onto a gravure roller; then the gravure roller was rotated, and the material was brought onto the gravure roller; the gravure roller was brought into contact with the modified base membrane 100 to apply the composite slurry to the modified base membrane 100) was adopted to apply the composite slurry to both sides of the modified base membrane 100 at a speed of 30 m/min. The base membrane was dried with a three-staged drying oven, with the temperatures for the stages of the drying oven being 50 °C, 60 °C and 55 °C respectively, to give a triple-layer coated lithium-ion battery separator (as shown in FIG. 2). The thickness of the coated lithium-ion battery separator was 16 µm, and the thickness of the coatings on both sides was 2 µm each. This batch of separators were marked as B.

### Example 3

1. 0.7 kg of polyvinylidene difluoride was added to 6.3 kg of DMAC solution and completely dissolved by mechanically stirring to give a transparent colloidal PVDF solution.
2. After corona pretreatment, a 12 µm PE base membrane was passed through a water tank containing a saturated aqueous solution of LiAlSi₂O₆ at a speed of 5 m/min. After passing through the water tank, the base membrane was dried in a drying oven to give the modified base membrane 100.
3. A gravure roller coating method (specifically, the colloidal PVDF solution was pumped onto a gravure roller; then the gravure roller was rotated, and the material was brought onto the gravure roller; the gravure roller was brought into contact with the modified base membrane 100 to apply the colloidal PVDF solution to the modified base membrane 100) was adopted to apply the colloidal PVDF slurry to both sides of the modified base membrane 100 at a speed of 30 m/min. The base membrane was dried with a three-staged drying oven, with the temperatures for the stages of the drying oven being 50 °C, 60 °C and 55 °C respectively, to give a triple-layer coated lithium-ion battery separator (as shown in FIG. 2). The thickness of the coated lithium-ion battery separator was 16 µm, and the thickness of the coatings on both sides was 2 µm each. This batch of separators were marked as C.

### Comparative Example 1

1. 0.7 kg of polyvinylidene difluoride was added to 6.3 kg of DMAC solution and completely dissolved by mechanically stirring to give a transparent colloidal solution a. 0.3 kg of powdered aluminum oxide was added to 2.7 kg of DMAC solution and completely dispersed by mechanically stirring to give a solution b. a and b were mixed by stirring to give a composite slurry.
2. A gravure roller coating method (specifically, the composite slurry was pumped onto a gravure roller; then the gravure roller was rotated, and the material was brought onto the gravure roller; the gravure roller was brought into contact with a base membrane to apply the composite slurry to the base membrane) was adopted to apply the composite slurry to one side of the base membrane at a speed of 30 m/min. After passing through water, the base membrane was dried with a three-staged drying oven, with the temperatures for the stages of the drying oven being 50 °C, 60 °C and 55 °C respectively, to give a double-layer coated lithium-ion battery separator. The thickness of the coated lithium-ion battery separator was 14 µm, and the thickness of the coating was 2 µm. This batch of separators were marked as D.

### Comparative Example 2

1. 0.7 kg of polyvinylidene difluoride was added to 6.3 kg of DMAC solution and completely dissolved by mechanically stirring to give a transparent colloidal solution a. 0.3 kg of powdered aluminum oxide was added to 2.7 kg of DMAC solution and completely dispersed by mechanically stirring to give a solution b. a and b were mixed by stirring to give a composite slurry.
2. A gravure roller coating method (specifically, the composite slurry was pumped onto a gravure roller; then the gravure roller was rotated, and the material was brought onto the gravure roller; the gravure roller was brought into contact with a base membrane to apply the composite slurry to the base membrane) was adopted to apply the composite slurry to both sides of the base membrane at a speed of 30 m/min. The base membrane was dried with a three-staged drying oven, with the temperatures for the stages of the drying oven being 50 °C, 60 °C and 55 °C respectively, to give a triple-layer coated lithium-ion battery separator. The thickness of the coated lithium-ion battery separator was 16 µm, and the thickness of the coatings on both sides was 2 µm each. This batch of separators were marked as E.

### Comparative Example 3

1. 0.7 kg of polyvinylidene difluoride was added to 6.3 kg of DMAC solution and completely dissolved by mechanically stirring to give a transparent colloidal PVDF solution.
2. A gravure roller coating method (specifically, the colloidal PVDF solution was pumped onto a gravure roller; then the gravure roller was rotated, and the material was brought onto the gravure roller; the gravure roller was brought into contact with a base membrane to apply the colloidal PVDF solution to the base membrane) was adopted to apply the colloidal PVDF slurry to both sides of the base membrane at a speed of 30 m/min. The base membrane was dried with a three-staged drying oven, with the temperatures for the stages of the drying oven being 50 °C, 60 °C and 55 °C respectively, to give a triple-layer coated lithium-ion battery separator. The thickness of the coated lithium-ion battery separator was 16 µm, and the thickness of the coatings on both sides was 2 µm each. This batch of separators were marked as F.

Batteries were manufactured using a conventional battery manufacturing method (including the steps of stacking or coiling the positive electrode, the separator and the negative electrode in sequence into an electrode core, injecting the electrolyte into the electrode core, and sealing, and then perform subsequent steps of shelving, formation and capacity determination and the like) known to those skilled in the art. Batteries in which separators from batches A, B, C, D, E and F were loaded respectively were tracked and labeled.

The separators of Examples 1-3 and Comparative Examples 1-3 were tested according to the performance parameter determination method described above, and the results were recorded, as shown in Table 1.

From the batteries with separators from batches A, B, C, D, E and F, 5 batteries per batch (labeled as A1-A5, B1-B5, C1-C5, D1-D5, E1-E5 and F1-F5) were selected for internal resistance and cycle performance tests, and the results were recorded, as shown in Table 2.

**Table 1. Performance tests for separators from 6 batches**

| Item | Label | Thermal shrinkage (%) | | Interfacial bonding (N/m) | Wetting distance (cm) | | Ionic conductivity S/cm |
|---|---|---|---|---|---|---|---|
| | | TD | MD | | TD | MD | |
| Example 1 | A | 0.5 | 0.4 | 17 | 5.3 | 5.7 | 3.3×10⁻³ |
| Example 2 | B | 0.3 | 0.2 | 21 | 5.0 | 5.5 | 2.6×10⁻³ |
| Example 3 | C | 7.4 | 7.7 | 16 | 3.2 | 3.6 | 2.1×10⁻³ |
| Comparative Example 1 | D | 0.4 | 0.6 | 15 | 3.4 | 3.5 | 0.75×10⁻³ |
| Comparative Example 2 | E | 0.3 | 0.4 | 22 | 3.3 | 3.6 | 0.63×10⁻³ |
| Comparative Example 3 | F | 7.8 | 8.6 | 14 | 2.0 | 2.2 | 0.51×10⁻³ |

**Table 2. Performance tests for batteries corresponding to separators from 6 batches**

| Item | Label | Internal resistance (mΩ) | Capacity retention (%) |
|---|---|---|---|
| Example 1 | A1 | 22.6 | 89.3 |
| | A2 | 21.3 | 89.1 |
| | A3 | 22.9 | 90.2 |
| | A4 | 22.1 | 89.9 |
| | A5 | 21.7 | 89.1 |
| Example 2 | B1 | 23.7 | 87.9 |
| | B2 | 24.3 | 87.5 |
| | B3 | 23.3 | 88.1 |
| | B4 | 25.1 | 87.0 |
| | B5 | 24.2 | 87.7 |
| Example 3 | C1 | 25.4 | 86.2 |
| | C2 | 25.8 | 86.6 |
| | C3 | 24.8 | 85.8 |
| | C4 | 26.1 | 86.6 |
| | C5 | 25.2 | 86.3 |
| Comparative Example 1 | D1 | 124.5 | 83.1 |
| | D2 | 125.3 | 82.7 |
| | D3 | 126.5 | 81.6 |
| | D4 | 122.3 | 83.7 |
| | D5 | 125.4 | 82.4 |
| Comparative Example 2 | E1 | 138.9 | 79.8 |
| | E2 | 139.6 | 79.1 |
| | E3 | 136.6 | 80.3 |
| | E4 | 138.4 | 79.6 |
| | E5 | 139.6 | 78.8 |
| Comparative Example 3 | F1 | 144.5 | 78.6 |
| | F2 | 145.3 | 78.3 |
| | F3 | 142.7 | 79.2 |
| | F4 | 143.3 | 78.9 |
| | F5 | 146.8 | 77.9 |

From Table 1 and Table 2, and comparisons of Example 1, Example 2 and Example 3, as well as comparisons of Comparative Example 1, Comparative Example 2 and Comparative Example 3, it can be seen that after the functional layer of the present invention was applied, the thermal shrinkage was significantly lowered, and the separators exhibited excellent thermal stability and bonding performance, which can allow a separator to be more firmly fixed after it is bonded to an electrode; correspondingly, the safety performance of the battery is greatly improved. In addition, the wettability was improved, the ionic conductivity was also improved to some extent, the internal resistance of the corresponding batteries was slightly lower, and the cycle performance was improved to some extent.

From Table 1 and Table 2, and comparisons of Example 1, Example 2 and Example 3 with Comparative Example 1, Comparative Example 2 and Comparative Example 3, it can be seen that after the base membrane was modified according to the present invention, the wettability was significantly improved, the ionic conductivity was greatly improved, the internal resistance of the corresponding batteries was greatly reduced, and the cycle performance was significantly improved.

Therefore, the separator of the present invention has excellent physical and chemical performance, thermal performance and electrochemical performance, and has extremely high value for industrial use.

The matters related to common general knowledge in the above description are not described in detail and can be understood by those skilled in the art.

The above description is only for the purpose of illustrating some specific examples of the present invention and is not intended to limit the present invention. Any modification, equivalent substitution and improvement and the like made without departing from the spirit and principle of the present invention shall fall within the protection scope of the present invention. The technical scope of the present invention is not limited to the content of the specification, and must be determined according to the scope of the claims.

## Claims

1. A separator, configured to be used by electrochemical devices; wherein the separator comprises a modified porous base membrane (100) and a functional layer (101) arranged on a surface of at least one side of the modified porous base membrane (100); the functional layer (101) contains a composite slurry containing organic and inorganic substances; the modified porous base membrane (100) contains particles that contain a lithium-conducting ionic compound.

2. The separator of claim 1, wherein the lithium-conducting ionic compound includes LiAlSi₂O₆, Li₂FeSiO₄ and LiFePO₄.

3. The separator of claim 1, wherein the particles that contain the lithium-conducting ionic compound have a particle size of 5-20 nm.

4. The separator of claim 1, wherein the composite slurry containing organic and inorganic substances comprises the following ingredients in parts by weight: 5-80 parts of an organic polymer, 3-40 parts of an inorganic substance, and 50-100 parts of an organic solvent.

5. The separator of claim 4, wherein the organic polymer is polyvinylidene difluoride with a molecular weight of 0.1-1 million; in the composite slurry containing organic and inorganic substances, solid content of the polyvinylidene difluoride is 5-20 wt%.

6. The separator of claim 4, wherein the inorganic substance comprises aluminum trioxide, boehmite, silicon dioxide, titanium dioxide, barium sulfate, calcium carbonate and calcium oxide.

7. The separator of claim 4, wherein the organic solvent is selected from one of or a combination of more than one of *N-*methylpyrrolidone (NMP), dimethylacetamide (DMAC), acetone, *N,N*-dimethylformamide (DMF) and dimethyl sulfoxide (DMSO).

8. A method for preparing the modified porous base membrane (100) of the separator according to any one of claims 1-3, comprising the following steps: subjecting an unmodified porous base membrane to corona pretreatment; after that, the unmodified porous base membrane after corona pretreatment is passed through a water tank containing a saturated aqueous solution of the lithium-conducting ionic compound, and then dried in a drying oven to give the modified porous base membrane (100) containing the particles that contain the lithium-conducting ionic compound.

9. The method for preparing the modified porous base membrane (100) of the separator according to claim 8, wherein a rate of the unmodified porous base membrane passing through the water tank containing the saturated aqueous solution of the lithium-conducting ionic compound is 5 m/min.

10. A method for preparing the separator of any one of claims 4-7, comprising the following steps:
S1, preparing the modified porous base membrane (100):
Subjecting an unmodified porous base membrane to corona pretreatment; passing the unmodified porous base membrane after the corona pretreatment through a water tank containing a saturated aqueous solution of the lithium-conducting ionic compound, and then performing drying in a drying oven to give the modified porous base membrane (100);
S2, preparing the composite slurry containing organic and inorganic substances;
dissolving the organic polymer in the organic solvent according to a predetermined ratio by mechanically stirring and mixing to obtain a first mixture; mixing the inorganic substance and the organic solvent evenly according to a predetermined ratio by mechanically stirring to obtain a second mixture, and mixing the first mixture in which the organic polymer is completely dissolved and the second mixture which is mixed evenly by mechanically stirring to give the composite slurry; and
S3, coating the composite slurry to the surface of at least one side of the modified porous base membrane (100) to form the functional layer (101).
